# EUROPEAN PATENT SPECIFICATION

(11) **EP 3 733 439 B1**
(45) Date of publication and mention of the grant of the patent: **06.07.2022**
(21) Application number: 20172642.9
(22) Date of filing: 04.05.2020
(51) Int. Cl.: B60K 11/02, A62C 3/07

(54) **AGRICULTURAL VEHICLE**
LANDWIRTSCHAFTLICHES FAHRZEUG
VÉHICULE AGRICOLE

(30) Priority: 03.05.2019 IT 201900006525
(43) Date of publication of application: 04.11.2020
(73) Proprietor: CNH Industrial Italia S.p.A., 10135 Torino (IT)
(72) Inventor: Boschi, Luca, 41056 Savignano sul Panaro (IT)
(74) Representative: CNH Industrial IP Department

(56) References cited:
- EP-A1- 0 443 210
- EP-A2- 0 887 524

## Description

### TECHNICAL FIELD

The present invention relates to an agricultural vehicle.

### BACKGROUND OF THE INVENTION

In the last years agricultural vehicles are requested to have powerful engines to meet the customers' requests and at the same time to be compliant with more and more stringent emission requirements. The number of components forming part of engine has increased and many components (manifold, turbocharger, etc.) present quite hot surfaces. During the normal use in the agricultural field, potentially inflammable organic materials (organic dust, crop, hay, chaff, etc.) may accumulate on the above hot surfaces. The temperature of the above hot surfaces is normally higher than the auto-ignition limit of the organic material and the risk of fire inside of the engine is relevant. EP0443210 discloses a cooling apparatus comprising a fan and an engine encased within a funnel shaped structure with an outlet which is disposed within the vicinity of the engine for keeping the vicinity of the engine (51) clear of inflammable debris.

The aim of the present invention is to provide a vehicle wherein the risk of fire in the engine due to the accumulation of the organic materials on hot surfaces is reduced. The aim of the present invention is to obtain the above result with a minimal modification of the lay-out of the engine.

### SUMMARY OF THE INVENTION

The aforementioned aim is reached by the present invention as claimed in the appended claim 1.

Accordingly the accumulation of organic material on the hot surfaces is prevented using the flux of air produced by the fan.

### BRIEF DESCRIPTION OF DRAWINGS

For a better understanding of the present invention, a preferred embodiment is described in the following, by way of a non-limiting example, with reference to the attached drawings wherein:
- Figure 1 is a lateral view of a portion of an engine of an agricultural vehicle according to an embodiment which is not part of the present invention;

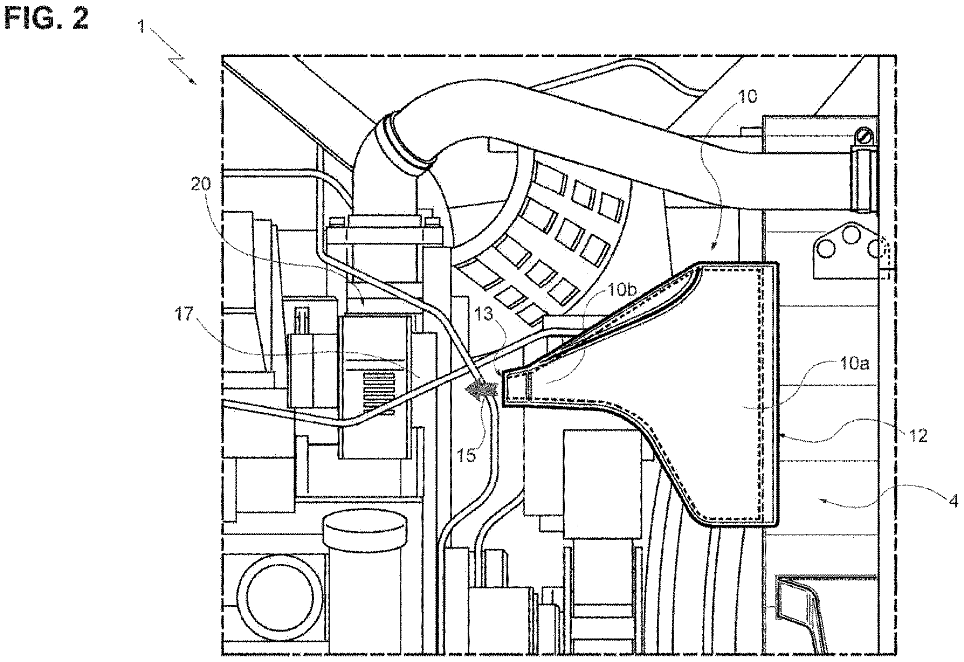

- Figure 2 is a perspective view of the portion of the engine according to an embodiment which is not part of the present invention ;

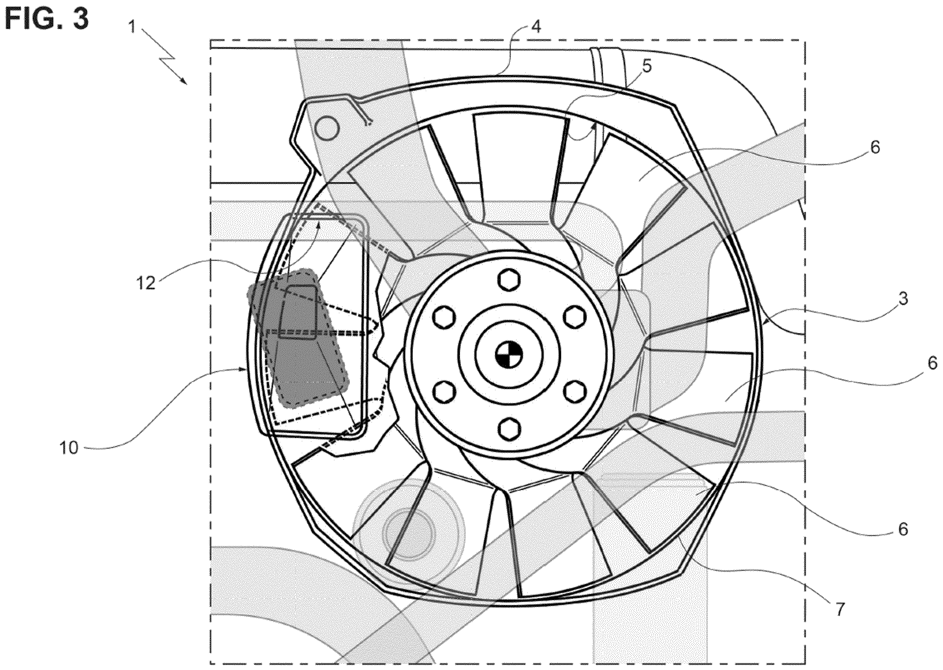

- Figure 3 is a front view of the portion of the engine; and
- Figure 4 is a view of an embodiment of the present invention.

### DETAILED DESCRIPTION OF THE INVENTION

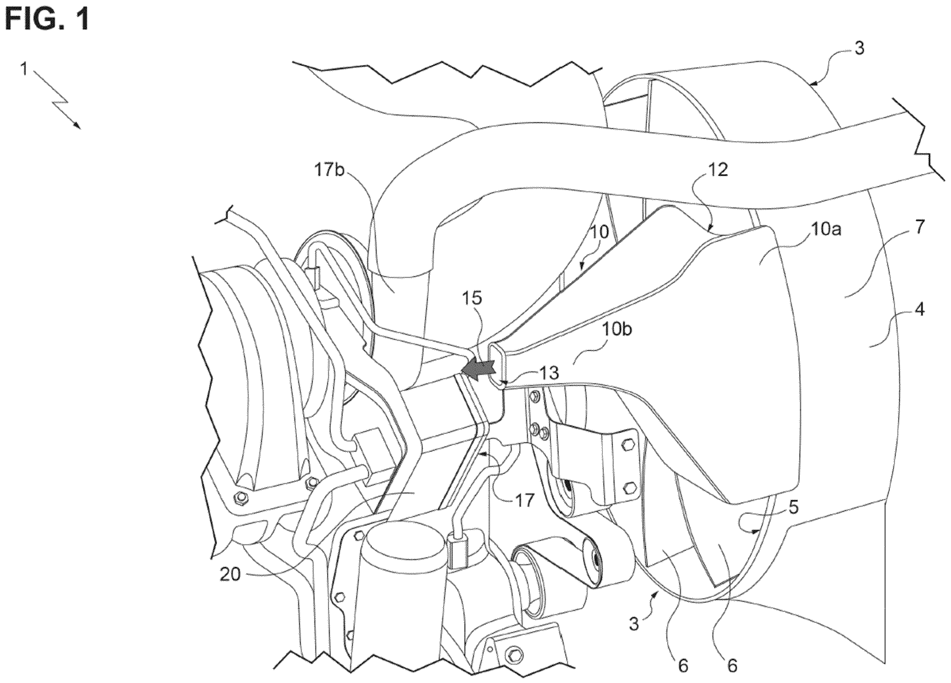

In figure 1 numeral 1 indicates an agricultural vehicle 1 (shown partially) provided with an internal combustion engine(not shown), typically a diesel engine. Vehicle 1 is designed to operate in agricultural environment where organic materials are cultivated, harvested, treated, moved or elaborated.

The combustion engine of known kind is provided with cooling fan 3 carried by a fan shroud 4 provided with a central circular aperture 5 to accommodate rotating fan blades 6. In the example the shroud 4 (of known kind) comprises a cylindrical wall 7 that internally defines the aperture 5 and accommodates the fan blades 6 rotating around an axis coaxial with the axis of the cylindrical wall 7.

The agricultural vehicle visible on figure 1 is provided with a funnel shaped member 10 having a first end portion 10-a defining an in inlet aperture 12 and a second end portion 10-b with a reduced section with respect to the first end portion 10-a and defining an outlet aperture 13.

The first end portion 10-a is designed to be connected with a portion of the fan shroud 4 (in the example a rim of the cylindrical wall 7, bolt or screws may be used) to face the blades 6 so that air blown by the fan blades 6 is supplied to the inlet aperture and air flowing in the funnel shaped member 10 is accelerated so that a flux of washing accelerated air (indicated by means of an arrow) is provided at the outlet aperture 13.

The outlet aperture 13 is placed to face a surface 17 of a component 20 of the engine so that the flux of washing air 15 sweeps the surface 17 preventing the accumulation of organic components on that surface 17. The surface 17 is a surface that is heated during the functioning of the engine.

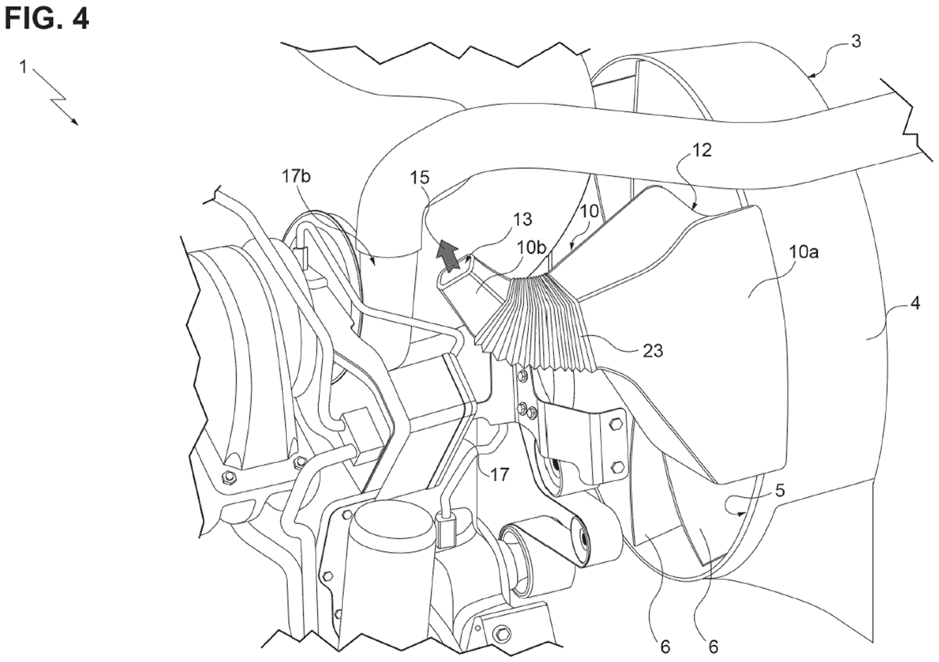

Accordingly, the surface 17 is washed constantly and the flux of accelerated air 15 prevents the accumulation of organic dust, crop, hay, chaff, etc. on the hot surface 17. The risk of fire is thus reduced without the need of providing the surface 17 with a thermal insulation. The described solution is simple, cheap and cost effective. This solution does not impact with the performances of the engine. Moreover, no specific maintenance is needed. The sweeping of surface 17 is obtained by using an energy that is wasted. According to the embodiment of the invention shown in figure 4 the funnel shaped member 10 is designed so that second end portion 10-b may be displaced with respect the first end portion 10-a in order to have an articulated outlet aperture 13) that may be positioned to face different surfaces 17 and 17b.

For instance, the funnel shaped member 10 may comprises rigid end portions and an intermediate deformable bellow-shaped portion 23 to permit the displacement of the second end portion 10-b with respect the first end portion 10-a.

According to another embodiment of the invention the agricultural vehicle may be equipped with a control unit for controlling the rotational velocity of the fan's blades independently from the temperature of the engine, so that the driver may command to force a high rotational speed even if the engine does not need to be cooled with the aim of creating a flux of further accelerated air preventing the accumulation of organic dust, crop, hay, chaff, etc. on the hot surface 17.

## Claims

1. Agricultural vehicle (1) provided with an internal combustion engine (2) provided with fan (3) carried by a fan shroud (4) having with an aperture (5) to accommodate rotating fan blades (6),
comprising a funnel shaped member (10) having a first end portion (10-a) defining an in inlet aperture (12) and a second end portion (10-b) with reduced section defining an outlet aperture (13); the first end portion (10-a) being designed to be connected with a portion (7) of the fan shroud (4) to face the blades (6) so that air blown by the fan blades (6) is supplied to the inlet aperture (12) and air flowing in the funnel shaped member (10) is accelerated so that a flux of washing accelerated air (15) is provided at the outlet aperture (13); said outlet aperture (13) being placed to face a surface (17) of a component (20) of the engine so that the flux of washing air (15) sweeps the surface (17) preventing the accumulation of organic components on the surface; said surface (17) is heated during the functioning of the engine, **characterized in that** the funnel shaped member (10) is designed so that second end portion (10-b) may be displaced with respect the first end portion (10-a) in order to have an articulated outlet aperture (13) that may be positioned to face different surfaces (17,17b).

2. Agricultural vehicle as claimed in claim 1, wherein the funnel shaped member (10) comprises rigid end portions and an intermediate bellow-shaped portion (23) to permit the displacement of the second end portion (10-b) with respect the first end portion (10-a).

3. Agricultural vehicle as claimed in any of the preceding claims, wherein a control unit is provided for controlling the rotational velocity of the fan's blades independently from the temperature of the engine.

## Patentansprüche

1. Landwirtschaftliches Fahrzeug (1) ausgestattet mit einem Verbrennungsmotor (2), der mit einem Gebläse (3) ausgestattet ist, das von einer Gebläseverkleidung (4) getragen wird, die eine Öffnung (5) zur Aufnahme sich drehender Lüfterflügel (6) aufweist,
umfassend ein trichterförmiges Element (10), das einen ersten Endabschnitt (10-a), der eine Einlassöffnung (12) definiert, und einen zweiten Endabschnitt (10-b) mit verringertem Querschnitt aufweist, der eine Auslassöffnung (13) definiert; wobei der erste Endabschnitt (10-a) ausgebildet ist, um mit einem Abschnitt (7) der Gebläseverkleidung (4) derart verbunden zu werden, dass er den Flügeln (6) zugewandt ist, sodass Luft, die von den Lüfterflügeln (6) abgegeben wird, der Einlassöffnung (12) zugeführt wird, und Luft, die in das trichterförmige Element (10) strömt, derart beschleunigt wird, dass ein beschleunigter Reinigungsluftstrom (15) an der Auslassöffnung (13) bereitgestellt wird; wobei die Auslassöffnung (13) derart angeordnet ist, dass sie einer Oberfläche (17) eines Bauteils (20) des Motors zugewandt ist, sodass der Reinigungsluftstrom (15) über die Oberfläche (17) strömt und das Ansammeln organischer Komponenten auf der Oberfläche (17) verhindert; wobei die Oberfläche (17) beim Betrieb des Motors erhitzt wird, **dadurch gekennzeichnet, dass** das trichterförmige Element (10) derart ausgebildet ist, dass der zweite Endabschnitt (10-b) relativ zum ersten Endabschnitt (10-a) verstellt werden kann, um eine bewegliche Auslassöffnung (13) zu bilden, die ausgerichtet werden kann, um verschiedenen Oberflächen (17, 17b) zugewandt zu sein.

2. Landwirtschaftliches Fahrzeug nach Anspruch 1, wobei das trichterförmige Element (10) starre Endabschnitte und einen dazwischenliegenden, balgförmigen Abschnitt (23) umfasst, um das Verstellen des zweiten Endabschnitts (10-b) relativ zum ersten Endabschnitt (10-a) zu ermöglichen.

3. Landwirtschaftliches Fahrzeug nach einem der vorangehenden Ansprüche, wobei eine Steuereinheit zum Steuern der Drehgeschwindigkeit der Flügel des Gebläses unabhängig von der Temperatur des Motors vorgesehen ist.

## Revendications

1. Engin agricole (1) équipé d'un moteur à combustion interne (2) équipé d'un ventilateur (3) porté par une buse de ventilateur (4) ayant une ouverture (5) pour recevoir les pales de ventilateur rotatives (6),
comprenant un membre en forme d'entonnoir (10) ayant une première partie d'extrémité (10-a) définissant une ouverture d'entrée (12) et une seconde partie d'extrémité (10-b) avec une section réduite définissant une ouverture de sortie (13) ; la première partie d'extrémité (10-a) étant conçue pour être reliée à une partie (7) de la buse de ventilateur (4) pour faire face aux pales (6) de sorte que l'air soufflé par les pales de ventilateur (6) est fourni dans l'ouverture d'entrée (12) et l'air circulant dans le membre en forme d'entonnoir (10) est accéléré de sorte qu'un flux d'air accéléré de lavage (15) est fourni à l'ouverture de sortie (13) ; ladite ouverture de sortie (13) étant positionnée pour faire face à une surface (17) d'un composant (20) du moteur de sorte que le flux d'air de lavage (15) balaie la surface (17) empêchant l'accumulation de composants organiques sur la surface ; ladite surface (17) étant chauffée pendant le fonctionnement du moteur,
**caractérisé en ce que** le membre en forme d'entonnoir (10) est conçu de sorte que la seconde partie d'extrémité (10-b) peut être déplacée par rapport à la première partie d'extrémité (10-a) afin d'avoir une ouverture de sortie articulée (13) qui peut être positionnée pour faire face à différentes surfaces (17, 17b).

2. Engin agricole selon la revendication 1, dans lequel le membre en forme d'entonnoir (10) comprend des parties d'extrémité rigides et une partie intermédiaire en forme de soufflet (23) pour permettre le déplacement de la seconde partie d'extrémité (10-b) par rapport à la première partie d'extrémité (10-a).

3. Engin agricole selon l'une quelconque des revendications précédentes, dans lequel une unité de commande est fournie pour commander la vitesse de rotation des pales du ventilateur indépendamment de la température du moteur.
